(19) Europäisches Patentamt
European Patent Office
Office européen des brevets

(11) Publication number: **0 401 050 B1**

(12) # EUROPEAN PATENT SPECIFICATION

(45) Date of publication of patent specification: **05.04.95**

(51) Int. Cl.⁶: **C09K 3/32**, C11D 1/825, B01F 17/34

(21) Application number: **90306031.7**

(22) Date of filing: **01.06.90**

The file contains technical information submitted after the application was filed and not included in this specification

(54) **Oil shoreline chemical cleaner.**

(30) Priority: **02.06.89 US 360655**

(43) Date of publication of application:
**05.12.90 Bulletin 90/49**

(45) Publication of the grant of the patent:
**05.04.95 Bulletin 95/14**

(84) Designated Contracting States:
**FR GB SE**

(56) References cited:
**EP-A- 0 254 704
DE-A- 2 928 674
US-A- 4 224 152**

(73) Proprietor: **EXXON RESEARCH AND ENGI-NEERING COMPANY
P.O.Box 390,
180 Park Avenue
Florham Park,
New Jersey 07932-0390 (US)**

(72) Inventor: **Bock, Jan
500 Juniper Lane
Bridgewater,
New Jersey 08807 (US)**

Inventor: **Canevari, Gerard Paul
104 Central Avenue
Cranford,
New Jersey 07016 (US)**
Inventor: **Fiocco, Robert John
77, Pine Grove Avenue
Summit,
New Jersey 07901 (US)**

(74) Representative: **Fletcher Watts, Susan J. et al
ESSO Engineering (Europe) Limited,
Patents and Licences,
Mailpoint 72,
Esso House,
Ermyn Way
Leatherhead,
Surrey KT22 8XE (GB)**

EP 0 401 050 B1

## Description

The present invention relates to a surfactant blend composition and a process for the removal of oil deposited on the earthen formation of a shoreline which is abutted by a body of fresh water or sea water.

There has been extensive use of cleaning aids/detergents/dispersants for the cleanup of oiled shorelines, particularly rock surfaces. While these agents have been effective, such as the use of COREXIT® 8666 to clean 200 miles of shoreline in TAMPA BAY, they released the removed oil in a finely dispersed state into a receiving water body. Although the dispersed oil plume will reduce in concentration in time, there is considerable concern and strong opposition to the use of dispersants which do not allow recovery of the oil. This is based on the premise that once beached, the spilled oil is trapped on the shoreline and is no longer a threat to the marine species in the open body of water. Dispersing it after cleaning reintroduces oil in the near shore environment.

However, non-chemical means to clean shorelines have been found to be labour intensive, physically disruptive to the area and marginally effective at best. In order to resolve this, a formulation of wetting agents has been developed that, while effectively removing oil from the rock surface and making the rock surface water wetted, does not disperse the oil into fine droplets. Rather, the removed oil, after being cleaned from the rock surface, maintains itself as an intact cohesive volume of oil. In this physical state, it can readily be mechanically recovered by conventional skimming equipment. This chemical means of cleaning oil-coated rocky shorelines has been shown to be better than wash water alone or other conventional mechanical means.

Another limitation of current shoreline cleanup approaches is that oil which has penetrated some distance below the upper surface layer is not effectively removed. This subsequently leads to a re-oiling of the upper surface layer as the tide comes in and promotes upward movement of the oil from below the upper surface.

Numerous U.S. Patents have taught methods for treating oil slicks on water, but these are non-applicable to the removal of oil already deposited on a shoreline. The U.S. Patents are: U.S. Patent Nos. 3,457,168; 3,577,340; 3,625,857; 3,639,255; 3,810,835; 4,098,694; 4,110,213; 4,197,197; 4,469,603; 4,597,893; and 4,623,468. Several British Patents, such as GB 1,255,394 and 1,404,684, also teach the use of dispersants for treating oil slicks on water.

U.S. Patent 4,224,152 teaches a method of pretreating a beach to prevent oil from being deposited on the beach, but fails to teach a method for removal of the oil from the beach after the oil has been deposited on the beach.

EP-A-254704 describes a surfactant solution for dispersing oil slicks on water. The surfactant solution contains a mixture of emulsifying agents and a wetting agent. The mixture of emulsifying agents comprises two blends, A and B, blend A having an HLB of 8.5 to 9.5 and blend B having an HLB of 8 to 10, the weight ratio of A:B being between 0.5:1 and 4:1.

US 4224152 describes surface-active compositions for dispersing or collecting oil slicks on water or for protecting or cleaning beaches. The compositions comprise (a) a mixture of surface-active compounds comprising at least one solid compound and at least one liquid compound, and (b) a mixture of solvents comprising a glycol ether and at least one n-paraffin. None of the surface-active compound mixtures (a) consists of two compounds having HLBs as required by the present invention.

In one aspect the present invention provides a composition consisting essentially of a solution of a first surfactant and a second surfactant in a hydrocarbon solvent, said solution having a Hydrophilic-Lipophilic Balance (HLB) of 7.5 to 10.5, the concentration of the first surfactant and the second surfactant being 10-70% by weight, the first surfactant having an HLB of 1 to 4 and the second surfactant having an HLB of 12 to 15, the weight ratio of the first surfactant to the second surfactant being 2:5-3:1, said hydrocarbon solvent being selected from paraffinic, isoparaffinic and naphthenic solvents.

In another aspect the present invention provides a process for the removal of oil deposited on the surface of an article which comprises the steps of:

(a) contacting the oil deposited on the surface of the article with a sufficient amount of a surfactant solution as defined above for a sufficient period of time for the surfactant solution to penetrate said oil; and

(b) washing with water said oil and said solution of surfactants from said article.

In a preferred embodiment, the present invention provides a process for the removal of oil deposited on the earthen formation of a shoreline which is abutted from a body of fresh water or sea water which comprises the steps of: contacting the oil deposited on the earthen formation with a surfactant solution as defined above for a sufficient period of time for the surfactant solution to penetrate the oil; washing with water the oil and the solution of surfac- tants from the earthen formation into the body of water, the oil and

EP 0 401 050 B1

the surfactants forming large oil globules, oil lenses or a coherent oil film that rise to the surface of the body of water; and removing the surface oil from the surface of the body of water by a mechanical process.

In a further aspect the present invention provides use of a surfactant solution as defined above for the removal of oil from an earthen formation of a shoreline.

The instant invention overcomes the previous difficulty of re-oiling of cleaned surface layers, when the tide comes in and displaces the difficult-to-clean sub-surface oil to the upper surface. The hydrocarbon solvent is designed to allow the proper surfactant mixture to penetrate the deep layer of oil in a reasonable time and to allow the subsequent water wash to remove the oil and prevent re-oiling of the surface layer. Additionally a very hydrophilic surfactant can be used in the post water wash to leave the rock surface water wet and reduce the tendency for re-oiling even further.

The present invention teaches a process and a composition which may be used in the process for the removal of oil deposited on the rocky surface of a shoreline, wherein the oil is contacted with a solution of a mixture of surfactants in a hydrocarbon solvent for a sufficient period of time to permit penetration of the surfactant into the oil-soaked layer, which can range down to several inches or more in depth. The surfactant solution deposited on the oil is subsequently washed with water and the surfactant solution and oil are washed into a body of water abutting the shoreline, wherein the oil and surfactants form a cohesive volume in the form of oil lenses or coherent films on the surface of the body of water. The oil lenses or coherent films are mechanically removed from the surface of the body of water, for example, by conventional booming and skimming techniques or by other mechanical means such as with an oleophilic sorbent material like a polypropylene rope or pads.

The surfactant solution of the instant invention has an HLB of 7.5 to 10.5, and more preferably 8.0 to 10. An explanation of HLB may be found in the references "Emulsions, Theory and Practice", P. Becher, Reinhold, New York, 2nd edition, 1965, Chapters 6 and 7, and in "Microemulsions", L. Prince, Academic Press, 1977, pp. 36-42. The surfactant solution comprises a mixture of surfactants, preferably two surfactants, for example a mixture of sorbitan monooleate such as Span 80 (trade name, available from ICI) and polyoxyethylene (20) sorbitan monooleate such as Tween 80 (trade name, available from ICI) dissolved in a hydrocarbon solvent such as an isoparaffinic solvent or in the oil itself, wherein the concentration of Span 80 and Tween 80 is 10 to 70 wt.%, more preferably 15 to 60 and most preferably 20 to 50 wt.%. The weight ratio of the first surfactant to the second, for example of Span 80 to Tween 80, is 2:5 to 3:1, more preferably 2:3 to 3:1 and most preferably 2:3 to 2:1.

The surfactant mixture having an HLB of 7.5 to 10.5 and more preferably 8.0 to 10 is formed from a mixture of one surfactant having an HLB of 1 to 4, such as Span 80, and a second surfactant having an HLB of 12 to 15, such as Tween 80.

The hydrocarbon solvent, which accelerates the penetration of the surfactant mixture, is selected from the group consisting of paraffinic, aromatic and naphthenic hydrocarbons and mixtures thereof, wherein the preferred hydrocarbon solvent is a paraffinic or isoparaffinic having 10 to 16 carbon atoms. One such solvent is Isopar-M, an isoparaffinic hydrocarbon oil manufactured by Exxon Company USA.

The solution of surfactants can be applied to the oil deposited on the earthen formation by a spraying process. The earthen formation includes the sand, the rock formations on the beach and any other articles deposited on the beach of the shoreline. The instant process is not limited in scope to the cleaning of shorelines but can be readily employed on an article having a layer of oil deposited thereon such as machinery, tanks, tankers, oil drilling equipment, and floors. The surfactant solution which has been sprayed on the oil may typically remain in contact with the oil for 0.1 to 4 hours, more preferably 0.5 to 3 hours, and most preferably 1 to 2 hours until the surfactant solution has penetrated the oil. However, in the case of thin oil layers, the time for penetration could be very short, e.g. within a few minutes.

In general, the proportion of surfactant solution to oil being cleaned can range from 1 part of surfactant solution per 100 parts of oil up to 1 part of solution per 1 part of oil; preferably 1 part of solution per 50 parts of oil to 1 part of solution per 2 parts of oil. The amount of surfactant solution required will depend on the degree of weathering of the oil and the temperature of the oil on the shoreline.

The surfactant solution and oil are removed from the article such as the earthen formations of a shoreline by washing the mixture of surfactants and oil from the article with water which washes the mixture of surfactants and oil from the article. The water can be applied by a conventional spraying process or by the tide from the abutting body of water.

The oil/surfactant can be washed with fresh water, sea water or a water having a surfactant therein, wherein the surfactant has a HLB of 13 to 15 and the concentration of the surfactant in water is 0.25 to 4.0 wt.%. This wash water can be applied at ambient temperature or heated to a temperature of 40 to 70°C. Higher temperatures are preferred in terms of enhancing both the rate and extent of oil removal from the shoreline.

3

In the case of the removal of the oil from the earthen formation of a shoreline, the tide from the body of water will wash across the oil with the surfactant deposited therein and the oil with the surfactant therein will be washed into the body of water abutting the shoreline. The oil and surfactant which has been washed into the body of water will form as a cohesive volume in the form of oil lenses or coherent films on the surface of the body of water. The lenses or films of oil/surfactant are readily removed from the surface of the water by conventional mechanical process means such as by absorption with oleophilic solids such as polypropylene rope or by booming and skimming techniques wherein the oil/surfactant droplets, lenses or films are skimmed off the surface of the body of water which can be fresh water or sea water.

In order to more fully describe the present invention, the following examples are herein set forth. However, it is to be understood that the following examples are for illustrative purposes only and thus should not be construed to limit the scope of the present invention.

Span 80, Span 85, Tween 80, Tween 21, Tween 85, Isopar-M, Corexit 8667 and Corexit 7664 are trade names.

EXAMPLE 1: SMALL SCALE ROCK WASHING TESTS

A jar test was developed to assess the effect of various surfactant blends for removing weathered Prodhoe Bay crude from rock. The oil coated rock was prepared by applying the weathered crude onto small blue stone gravel. Four pieces of oil-coated gravel were placed in jar. The 12 drops of various surfactant blends were added and allowed to soak for 1 hr. Next 200 ml of sea water was gently added.

The formulation tested and the observations made are summarized in Table 1. It can be seen that by combining Sorbitan monooleate (SPAN 80) and polyoxyethylene (20) Sorbitan monoleate (TWEEN 80) with Isopar M (IM) in a ratio so as to effect a Hydrophilic-Lipophilic Balance (HLB) of 10, a formulation with poor dispersing characteristics is produced (formulation 5 in Table 1). A 20% addition of this surfactant formulation into a hydrocarbon solvent of ISOPAR M (80%) results in uniquely effective wetting agent that is capable of cleaning even viscous emulsified or weathered oil from the rock surface.

Conversely, the same generic surfactants blended to produce a HLB of 7.0 (Formulation 7) is not as effective in removing oil from rock surfaces. Also it is interesting to note that other generic surfactants, such as polyoxyethylene(5) sorbitan monooleate, Tween 21, producing a similar HLB of 10 do not fulfill the embodiments of this invention and produce a fine dispersion (Formulation 3).

In conclusion the sample of 20% (50% Span 80 and 50% Tween 80) + 80% IM removed oil very well from the rocks with no dispersion whereas the other samples either failed to remove the oil or a dispersion was created.

Table 1

SUMMARY OF SMALL SCALE ROCK WASHING TEST

| Formulation No. | Chemical | HLB | Observation after Gentle addition of sea water |
|---|---|---|---|
| 1 | 20% Span 80 + 80 % IM* | 4.3 | No oil removal |
| 2 | 20% Span 85 + 80% IM | 1.8 | Very little oil removal |
| 3 | 20% Tween 21 + 80% IM | 10.0 | Very good dispersion: much brown water |
| 4 | 20% Tween 20 + 80% IM | 13.3 | Very good dispersion: much brown water |
| 5 | 20% (50% Tween 80 + 50% Span-80) + 80% IM | 10.0 | Very good oil Removal: No brown water;poor Dispersion |
| 6 | 20% Tween 85 + 80% IM | 11.0 | Very good dispersion: Much brown water |
| 7 | 28% (25% Tween-80 + 75 % Span 80) + 72% IM | 7.0 | Good oil Removal: Not much dispersion |
| 8 | Control (Just seawater) | | No oil removal |

* IM is an isoparaffinic solvent called Isopar M manufactured by Exxon

EXAMPLE 2: LARGE SCALE ROCK WASHING TESTS

A single 9' x 9' test table with a bed of river gravel and white marble stones was set up. This had the capability to sample runoff below the surface of the bed to assess the extent of dispersion. Weathered Alaska North Slope (ANS) Crude was prepared by distilling off the light ends at either 400°F or 509°F and applied at a rate of 4 gallons per test beds. The salt water wash rate was about 15 gallons per minute. Table 2 describes the conditions and observations for these large scale washing tests.

For tests No. 1a, 1b and 1c, water washing alone was employed. While in some situation the upper surface of the top layer of rocks appeared cleaner, oil still remained on the underside of the surface rocks and there was basically no oil removed.

5

During test No. 2, 1 gallon of a commercially available oil spill dispersant, COREXIT 8667 manufactured by Exxon was applied full strength to the test bed. After a soak period of 1/2 hour, the oiled test bed was flushed with sea water for 1 minute at the rate of 15 gal. per minute. Very good cleaning resulted or is attested by the 69% oil removal measurement. However, a very fine dispersion of oil in the wash water resulted and hence the oil could not be skimmed and recovered from the water surface.

However, test No. 3 utilizing the subject invention as reflected in the formulation No. 5 as set forth in Table 1 conducted under the same procedure produced even better oil removal (76% oil removed) but more importantly the oil could be readily skimmed from the surface of the water abutting the shoreline because the oil was not dispersed into the water but formed a coherent oil film floating on the surface of the water.

Finally a side by side comparison of the subject invention, COREXIT 7664 (a commercial water based beach cleaner) and water alone was conducted as reported as Tests No. 6A, 6B and 6C. The improved cleaning of the subject invention was visually obvious by comparison with the commercial product (COREXIT 7664) and wash water only.

Table 2
Summary of Large Scale Rock Washing Tests

| Test No. | Chemical Pretreat | Oil(1) | Salt Water Wash Time (Total) (2) | Visually Observed Result | Ambient Temp, °F | Condition of Oil Removed (relative to wash water) | % Oil Removal Based on Oiled Rock Weight |
|---|---|---|---|---|---|---|---|
| 1A | None | 509°F+ ANS crude | 1 min. | No cleaning | 67 | Floating | 0 |
| 1B | None | From previous test | 4 min | Some surface cleaning | 67 | Floating | 0 |
| 1C | None | From previous test | 7 min | Surface cleaning | 67 | Floating | 0 |
| 2 | Corexit 8667 | From previous test | 1 min | Very good cleaning | 60 | Dispersed & floating | 69 |
| 3 | 1-5 (4) | 400°F+ ANS crude | 1 min | Very good cleaning | 68 | Floating | 76 |
| 4 | Corexit 7664 | 400°F+ ANS crude | 1 min | Very good cleaning | 67 | Floating | 52 |
| 5 | Isopar-M | 400°F+ ANS crude | 1 min | Moderate cleaning | 65 | Floating | 5 |
| 6A | None | 420°F+ ANS mousse | 1 min | Little cleaning | 72 | Floating | - |
| 6B | Corexit 7664 | " | 1 min | Moderately good cleaning | 72 | Floating | - |
| 6C | 1-5 (4) | " | 1 min | Very good cleaning | 72 | Floating | - |

(1) ANS is Alaskan North Slope Crude Oil
(2) Wash water rate at 15 gpm
(3) Based on analysis of representative stones removed from the bed
(4) 1-5 is formulation No. 5 from Table 1

## Claims

1. A composition consisting essentially of a solution of a first surfactant and a second surfactant in a hydrocarbon solvent, said solution having a Hydrophilic-Lipophilic Balance (HLB) of 7.5 to 10.5, the concentration of the first surfactant and the second surfactant being 10-70% by weight, the first surfactant having an HLB of 1 to 4 and the second surfactant having an HLB of 12 to 15, the weight ratio of the first surfactant to the second surfactant being 2:5-3:1, said hydrocarbon solvent being selected from paraffinic, isoparaffinic and naphthenic solvents.

2. A composition according to claim 1 wherein the first surfactant is a sorbitan monooleate and the second surfactant is a polyoxyethylene (20) sorbitan monooleate.

EP 0 401 050 B1

3. A composition according to claim 1 or 2 wherein the hydrocarbon solvent is a paraffinic or isoparaffinic solvent having from 10 to 16 carbon atoms.

4. A composition according to any of the preceding claims wherein the hydrocarbon solvent is an isoparaffinic solvent.

5. A process for the removal of oil deposited on the surface of an article which comprises the steps of:
   (a) contacting the oil deposited on the surface of the article with a sufficient amount of a surfactant solution as defined in any preceding claim for a sufficient period of time for the surfactant solution to penetrate the oil; and
   (b) washing with water the oil and the surfactant solution from the article.

6. A process according to claim 5, further including the step of collecting the mature of water, oil and surfactant solution which has been washed from the article.

7. A process for the removal of oil deposited on the earthen formation of a shoreline which is abutted from a body of fresh water or sea water which comprises the steps of:
   (a) contacting the oil deposited on the earthen formation with a sufficient amount of surfactant solution as defined in any of claims 1-4 for a sufficient period of time for the surfactant solution to penetrate the oil;
   (b) washing with water the oil and the surfactant solution from the earthen formation into the body of water, the oil and the surfactants forming lenses or films on the surface of the body of water; and
   (c) removing the films or lenses from the surface of the body of water by a mechanical process.

8. A process according to claim 7 wherein the water is from the tide of the body of water.

9. A process according to claim 7 wherein the water is sprayed onto the surfactant deposited on the oil.

10. A process according to any of claims 7 to 9 wherein the mechanical process comprises the skimming of the oil/surfactant from the surface of the body of water.

11. A process according to any of claims 7 to 9 wherein the mechanical process comprises the absorption of the oil/surfactant from the surface of the body of water with an oleophilic material.

12. A process according to any of claims 5 to 11 wherein said time is 1 to 4 hours.

13. A process according to any of claims 5 to 12 wherein the first surfactant is sorbitan monooleate and the second surfactant is polyoxyethylene (20) sorbitan monooleate.

14. Use of a surfactant solution as defined in any of claims 1 to 4 for the removal of oil from an earthen formation of a shoreline.

**Patentansprüche**

1. Zusammensetzung, die im wesentlichen aus einer Lösung eines ersten Tensids und eines zweiten Tensids in einem Kohlenwasserstofflösungsmittel besteht, wobei die Lösung ein hydrophil-lipophiles Gleichgewicht (HLB-Wert) von 7,5 bis 10,5 aufweist, die Konzentration des ersten Tensids und des zweiten Tensids 10 bis 70 Gew.% beträgt, das erste Tensid einen HLB-Wert von 1 bis 4 und das zweite Tensid einen HLB-Wert von 12 bis 15 aufweist, das Gewichtsverhältnis von dem ersten Tensid zu dem zweiten Tensid 2:5 bis 3:1 beträgt und das Kohlenwasserstofflösungsmittel ausgewählt ist aus paraffinischen, isoparaffinischen und naphthenischen Lösungsmitteln.

2. Zusammensetzung nach Anspruch 1, bei der das erste Tensid ein Sorbitanmonooleat und das zweite Tensid ein Polyoxyethylen(20)sorbitanmonooleat ist.

3. Zusammensetzung nach Anspruch 1 oder 2, bei der das Kohlenwasserstofflösungsmittel ein paraffinisches oder isoparaffinisches Lösungsmittel mit 10 bis 16 Kohlenstoffatomen ist.

8

**4.** Zusammensetzung nach einem der vorhergehenden Ansprüche, bei der das Kohlenwasserstofflösungsmittel ein isoparaffinisches Lösungsmittel ist.

**5.** Verfahren zur Entfernung von auf der Oberfläche eines Gegenstands abgesetztem Öl, bei dem
(a) das auf der Oberfläche des Gegenstands abgesetzte Öl mit einer ausreichenden Menge einer Tensidlösung gemäß einem der vorhergehenden Ansprüche für eine ausreichende Zeitdauer kontaktiert wird, damit die Tensidlösung das Öl penetriert, und
(b) das Öl und die Tensidlösung mit Wasser von dem Gegenstand gewaschen werden.

**6.** Verfahren nach Anspruch 5, bei dem außerdem die Mischung aus Wasser, Öl und Tensidlösung, die von dem Gegenstand gewaschen worden ist, aufgefangen wird.

**7.** Verfahren zur Entfernung von Öl, das auf der Erdformation einer Küstenlinie abgesetzt ist, die an eine Ansammlung von Süßwasser oder Seewasser stößt, bei dem
(a) das auf der Erdformation abgesetzte Öl mit einer ausreichenden Menge Tensidlösung gemäß einem der Ansprüche 1 bis 4 für eine ausreichende Zeitdauer kontaktiert wird, damit die Tensidlösung das Öl penetriert,
(b) das Öl und die Tensidlösung mit Wasser von der Erdformation in die Wasseransammlung gewaschen werden, wobei das Öl und die Tenside auf der Oberfläche der Wasseransammlung Linsen oder Filme bilden, und
(c) die Filme oder Linsen von der Oberfläche der Wasseransammlung mittels eines mechanischen Verfahrens entfernt werden.

**8.** Verfahren nach Anspruch 7, bei dem das Wasser von der Tide (Gezeitenströmung) der Wasseransammlung ist.

**9.** Verfahren nach Anspruch 7, bei dem das Wasser auf das auf dem Öl abgesetzte Tensid gesprüht wird.

**10.** Verfahren nach einem der Ansprüche 7 bis 9, bei dem das mechanische Verfahren das Abschöpfen des Öls/Tensids von der Wasseransammlung umfaßt.

**11.** Verfahren nach einem der Ansprüche 7 bis 9, bei dem das mechanische Verfahren die Absorption des Öls/Tensids von der Oberfläche der Wasseransammlung mit einem oleophilen Material umfaßt.

**12.** Verfahren nach einem der Ansprüche 5 bis 11, bei dem die Zeitdauer 1 bis 4 Stunden beträgt.

**13.** Verfahren nach einem der Ansprüche 5 bis 12, bei dem das erste Tensid Sorbitanmonooleat und das zweite Tensid Polyoxyethylen(20)sorbitanmonooleat ist.

**14.** Verwendung einer Tensidlösung gemäß einem der Ansprüche 1 bis 4 zur Entfernung von Öl von einer Erdformation einer Küstenlinie.

**Revendications**

**1.** Composition constituée essentiellement d'une solution d'un premier agent tensio-actif et d'un deuxième agent tensio-actif dans un solvant hydrocarboné, ladite solution ayant un équilibre hydrophile-lipophile (HLB) de 7,5 à 10,5, la concentration du premier agent tensioactif et du deuxième agent tensio-actif étant de 10-70 % en poids, le premier agent tensio-actif ayant un HLB de 1 à 4 et le deuxième agent tensio-actif ayant un HLB de 12 à 15, le rapport pondéral du premier agent tensio-actif au deuxième agent tensio-actif étant de 2:5 à 3:1, ledit solvant hydrocarboné étant choisi parmi les solvants paraffiniques, isoparaffiniques et naphténiques.

**2.** Composition selon la revendication 1, dans laquelle le premier agent tensio-actif est un monooléate de sorbitan et le deuxième agent tensio-actif est un monooléate de sorbitan et de polyoxyéthylène (20).

**3.** Composition selon la revendication 1 ou 2, dans laquelle le solvant hydrocarboné est un solvant paraffinique ou isoparaffinique ayant 10 à 16 atomes de carbone.

4. Composition selon l'une quelconque des revendications précédentes, dans laquelle le solvant hydrocarboné est un solvant isoparaffinique.

5. Procédé d'élimination de l'huile déposée à la surface d'un article, qui comprend les stades suivants:
   (a) on met en contact l'huile déposée à la surface de l'article avec une quantité suffisante d'une solution tensio-active selon l'une quelconque des revendications précédentes pendant une période de temps suffisante pour que la solution tensio-active pénètre dans l'huile, et
   (b) on sépare par lavage à l'eau l'huile et la solution tensio-active de l'article.

6. Procédé selon la revendication 5, comprenant par ailleurs le stade de collecte du mélange d'eau, d'huile et de solution tensio-active qui a été séparé de l'article par lavage.

7. Procédé d'élimination de l'huile déposée sur la formation de terre d'un rivage contre lequel butte une masse d'eau douce ou d'eau de mer, comprenant les stades suivants :
   (a) on met en contact l'huile déposée sur la formation de terre avec une quantité suffisante de solution tensio-active telle que définie dans l'une quelconque des revendications 1-4 pendant une période de temps suffisante pour que la solution tensio-active puisse pénétrer dans l'huile,
   (b) on sépare par lavage à l'eau l'huile et la solution tensio-active de la formation de terre dans la masse d'eau, l'huile et les agents tensio-actifs formant des lentilles ou des films à la surface de la masse d'eau, et
   (c) on élimine les films ou lentilles de la surface de la masse d'eau par un processus mécanique.

8. Procédé selon la revendication 7, dans lequel l'eau provient de la marée de la masse d'eau.

9. Procédé selon la revendication 7, dans lequel l'eau est pulvérisée sur l'agent tensio-actif déposé sur l'huile.

10. Procédé selon l'une quelconque des revendications 7 à 9, dans lequel le processus mécanique comprend l'écrémage du mélange huile/agent tensio-actif de la surface de la masse d'eau.

11. Procédé selon l'une quelconque des revendications 7 à 9, dans lequel le processus mécanique comprend l'absorption du mélange huile/agent tensio-actif à la surface de la masse d'eau par une matière oléophile.

12. Procédé selon l'une quelconque des revendications 5 à 11, dans lequel ladite période de temps est de 1 à 4 heures.

13. Procédé selon l'une quelconque des revendications 5 à 12, dans lequel le premier agent tensio-actif est le monooléate de sorbitan et le deuxième agent tensio-actif est le monooléate de sorbitan et de polyoxyéthylène (20).

14. Utilisation d'une solution tensio-active selon l'une quelconque des revendications 1 à 4 pour l'élimination d'huile d'une formation de terre sur un rivage.